# EUROPEAN PATENT APPLICATION

(11) **EP 1 613 077 A1**
(43) Date of publication of application: **04.01.2006**
(21) Application number: 05253950.9
(22) Date of filing: 24.06.2005
(51) Int. Cl.: H04N 5/91, H04N 5/445, G11B 27/34

(54) **Displaying information on a digital recording and reproducing device**

(30) Priority: 28.06.2004 JP 2004189598
(71) Applicant: ORION ELECTRIC CO., Ltd., Takefu-City, Fukui 915-8555 (JP)
(72) Inventor: Hosojima, Kazuhiro, c/o Intell Prop. Department, Takefu-city Fukui 915-8555 (JP)
(74) Representative: Paget, Hugh Charles Edward

(57) **Abstract**

To provide a digital recording and reproducing device and a method of displaying information on the digital recording and reproducing device capable of easily comprehending recorded contents to be previewed by displaying information on a plurality of recorded contents recorded in a large-capacity recording medium such as a hard disk and optical disk through accurate and simple operations.

A digital recording and reproducing device 1 records recorded contents information such as titles and recording dates and times of contents recorded in a recording medium 70 into an information storage area, reads the information and stores in an internal memory 42, etc. , andwhen reproduction of recorded contents which has been suspended is resumed or at the time of switchover between a plurality of recorded contents of the recording medium 70 or the like, the digital recording and reproducing device 1 reads the recorded contents information of recorded contents to be reproduced from now from the internal memory 42, etc. , and automatically displays the recorded contents information together with the reproduction start video for a predetermined time.

## Description

### BACKGROUND OF THE INVENTION

### Field of the invention

The present invention relates to a digital recording and reproducing device capable of recording and reproducing a plurality of large-volume programs as digital information and a method of displaying information on the digital recording and reproducing device, and more particularly, to a technological field of a digital recording and reproducing device and a method of displaying information on the digital recording and reproducing device with excellent practicability allowing a user to easily comprehend recorded contents to be previewed by displaying information on a plurality of recorded contents recorded in a recording medium such as an optical disk and hard disk through simple operations.

### Description of the related art

Conventionally, when a user selects and reproduces a desired program from a recording medium in which a plurality of television programs, etc., are recorded, start dates and times of recording are displayed for the plurality of recorded contents recorded in the recording medium respectively. Or still images at the beginning of the plurality of recorded contents recorded in the recording medium are stored according to their time axis addresses, and when they are reproduced, a list of still images representing the respective recorded contents is displayed and the user selects recorded contents to be reproduced from this list of still images using a remote controller so as to view a reproduced video of the program.

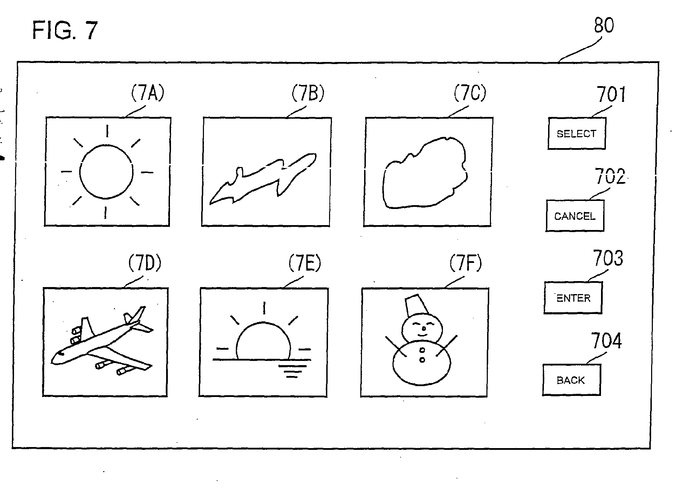

With regard to such a recording and reproducing device, for example, the following conventional technologies are known. Japanese Patent Laid-Open No. 2004-32375 describes a technology which shows a plurality of still images at the beginning of a plurality of recorded contents to be reproduced in the form of a list such as (7A) to (7F) shown in FIG. 7 on a display screen 80 , allows a user to select recorded contents of interest to the user from the list of still images by operating a remote controller to search for the contents using the still images and includes a memory which stores, when reproduction of the recorded contents is suspended, stop position information for identifying a portion in the recorded contents from which the reproduction is to be resumed and a CPU which decides, based on the recorded stop position information, whether the recorded contents to be reproduced this time are recorded contents whose suspended reproduction should be resumed or recorded contents which should be reproduced from the beginning of the recorded contents, identifies, when the recorded contents to be reproduced are recorded contents whose suspended reproduction should be resumed, the resuming portion based on the stop position information, outputs a still image representing the identified resuming portion or outputs, when the recorded contents to be reproduced are recorded contents which should be reproduced from the beginning of the recorded contents, a preset still image.

Furthermore, Japanese Patent Laid-Open No. 2003-101911 describes a technology which displays a list of still images (not shown) at the beginning of a plurality of recorded contents recorded in a recording medium, allows a scene search, includes a reproduction stop position table which stores information on past instances in which the user instructed stoppage of reproduction of programs, and when the user gives a scene search instruction by operating a remote controller, the CPU has the function of extracting still images corresponding to the reproduction stop positions with reference to the reproduction stop position table and displaying the still images corresponding to the reproduction stop positions on a scene search screen and uses this function as one of alternatives to select the reproduction start position, thus allowing the user to immediately access the remaining portions to be viewed. Furthermore, operating remote controllers which differ from one user to another also allows a plurality of users to use the same recording medium.

Furthermore, Japanese Patent Laid-Open No. 11-134841 describes a technology which stores times at which both or either one of a video signal and speech signal recorded in a tape recording medium are reproduced as reproducing time data in a memory section, and reads and displays the data on a display section (not shown), thus allowing the user to confirm the dates and times of reproduction of the tape.

### SUMMARY OF THE INVENTION

It is an object of the present invention to provide a digital recording and reproducing device and a method of displaying information on the digital recording and reproducing device capable of displaying information on recorded contents to be reproduced from a recording medium in which a plurality of recorded contents are recorded exactly for a predetermined time together with the reproduced video, especially reducing manual operations of a remote controller and simply displaying a summary of the recording in the recording medium.

According to the conventional technologies, the digital recording and reproducing device in Japanese Patent Laid-Open No. 2004-32375 displays a list of still images at the beginning of a plurality of recorded contents recorded in a recording medium and enables a search from the list of still images allowing the user to select recorded contents of interest to the user from the list of still images displayed by operating a remote controller and decides whether reproduction of individual recorded contents is suspended or not, displays a still image corresponding to the stop position of contents whose reproduction is suspended and displays a still image at the beginning of the contents whose reproduction is not suspended. However, the invention only displays a still image at the beginning of recorded contents irrespective of whether reproduction thereof is suspended or not, and does not describe any display of information on recorded contents whose reproduction is started.

Furthermore, the digital recording and reproducing device in Japanese Patent Laid-Open No. 2003-101911 displays a list of still images at the beginning of apluralityof recorded contents recorded in a recording medium to enable a scene search, stores information on past instances in which the user instructed stoppage of reproduction of programs and extracts, when the user gives a scene search instruction by operating a remote controller, a still image corresponding to the reproduction stop position. However, displaying the still image at the beginning of recorded contents whose reproduction is stopped requires an operation using the remote controller and does not describe any display of information on recorded contents whose reproduction is started.

Thus, Japanese Patent Laid-Open No. 2004-032375 and Japanese Patent Laid-Open No. 2003-101911 display a list of still images corresponding to a plurality of recorded contents recorded in a recording medium, displays, when the suspended reproduction is resumed, a still image whose resuming portion is specified, but none of these inventions displays recorded contents information as to the program contents of the still image, and therefore in such a situation in which the user needs to hastily start recording just before a program starts because the user remembers not having made any recording reservation beforehand or the user changes his/her mind at some midpoint of a program the user is viewing and no longer wants to record the program, the reproduction start time may often differ from the real start time of the program to be recorded. In such a situation, there may be cases where the recording start time coincides with the last part of the program just before the program to be recorded or it coincides with commercial timings. In such cases, it is difficult to guess a summary of the recorded program only from the still image of the start screen representing the recorded contents. Furthermore, even if the timing coincides with the start of the program the user originally wants to view, the still image displays an instant of the program and it is well imaginable that the user may not remember a summary of the program from the recording medium which stores a plurality of recording contents. Moreover, the user needs to perform an operation of selecting recorded contents indicated by reference numeral 701 in FIG. 7 from the list of still images displayed on a display screen every time the user reproduces recorded contents recorded in the recording medium and an operation of confirming indicated by reference numeral 703 in FIG. 7, which is complicated work and hardly provides an amount of information enough to allow the user to remember the recording contents from the still image of 1 frame representing the recorded contents. Furthermore, when suspending the reproduction, the contents at the moment of suspension may be changed depending on the reason for the suspension as follows. For example, when the user cannot help but suspend the reproduction due to a sudden visitor or telephone call, the user is likely to make an emergency stop of the program being reproduced at some midpoint and when reproduction is resumed later, the still image at the time of stoppage of reproduction is displayed, which allows the user to remember the summary of the program before the reproduction is stopped from the still image. On the other hand, when the user stops the reproduction because the user remembers something to do, the user often chooses a commercial timing as the timing to stop the reproduction. In such a case, when the reproduction is resumed later, the still image of the commercial is displayed, and so the user sometimes has difficulty in figuring out what program was being recorded when the still image of the commercial was taken. Moreover, recording the still image requires a memory area for storage, which leads to a cost increase for the memory, etc. , and also leads to a problem that storing the still image causes signal processing to become more complicated.

Furthermore, the device described in Japanese Patent Laid-Open No. 11-134841 stores the time at which a Video/audio signal recorded in a tape recording medium is reproduced as reproducing time data in the memory section so that the user can check the date and time of the tape reproduction. However, this method does not automatically read and display the data stored in the memory section and the contents displayed only indicate the position of a pause of reproduction, that is, time information indicating the reproduction position and there is a problem that it is not possible to know the kind of reproduced video and the title of the recorded contents.

The digital recording and reproducing device according to a first aspect of the invention comprises recording and reproducing means for recording and reproducing a plurality of recorded contents into and from a randomly accessible recording medium and a remote controller which remote-controls the recording and reproducing means, characterized in that recorded contents information such as titles and recording dates and times of the plurality of recorded contents recorded in the recording medium is recorded in an information storage area of the recording medium, the recorded contents information is read from the information storage area, stored in a memory by a recorded contents information processing section, the recorded contents information is read by the recorded contents information processing section from the memory every time reproduction of the recorded contents is instructed and information display means is provided for displaying the recorded contents information together with a motion video whose reproduction is started by the display control section for a predetermined time.

According to the first aspect of the invention, the recorded contents information such as titles and recording dates and times of the plurality of recorded contents recorded in the recording medium are displayed together with the reproduced motion video every time reproduction of the recorded contents is instructed, and therefore it is possible to easily and exactly confirm a summary of a program whose reproduction is started from both the reproduced motion video, and displayed recording date and time and a title representing the program contents, etc.

The method of displaying information on a digital recording and reproducing device comprising the information display means according to a second aspect of the invention is characterized in that when simple reproduction is carried out and reproduction is instructed, reproduction of the plurality of recorded contents recorded in the recording medium is automatically started one by one starting with the initially recorded contents and the recorded contents information is automatically displayed together with the motion video whose reproduction is started for a predetermined time.

According to the second aspect of the invention, when simple reproduction is carried out and reproduction is instructed, reproduction of the plurality of recorded contents recorded in the recording medium is automatically started one by one starting with the initially recorded contents and the recorded contents information is automatically displayed together with the motion video whose reproduction is started for a predetermined time, and therefore it is easy to reproduce recorded contents in order of recording and it is possible to easily and exactly check a summary of the program from the motion video of the recorded contents whose reproduction is started and the automatically displayed title and recording date and time, etc.

The method of displaying information on a digital recording and reproducing device comprising the information display means according to a third aspect of the invention is characterized in that when selective reproduction is carried out, a list of information on the plurality of recorded contents is displayed, recorded contents to be reproduced are selected from the list of information on the displayed recording contents and the recorded contents information is thereby automatically displayed together with the selected motion video whose reproduction is started for a predetermined time.

According to the third aspect of the invention, when selective reproduction is carried out, a list of information on the plurality of recorded contents is displayed, recorded contents to be reproduced are selected from the list of information on the displayed recording contents and the recorded contents information is thereby automatically displayed together with the selected motion video whose reproduction is started for a predetermined time, and therefore it is possible to select recorded contents of a desired program from the list display and reconfirm a summary of the program from the motion video of the recorded contents whose reproduction is started and the automatically displayed title and recording date and time, etc.

The method of displaying information on a digital recording and reproducing device comprising the information display means according to a fourth aspect of the invention information is characterized in that when reproduction is carried out from a stop position, reproduction is resumed starting at the stop position at which the reproduction is stopped and the recorded contents information is automatically displayed together with a motion video whose reproduction is started for a predetermined time.

According to the fourth aspect of the invention, when reproduction is carried out from a stop position, reproduction is resumed starting at the stop position at which the reproduction is stopped and the recorded contents information is automatically displayed together with a motion video whose reproduction is started for a predetermined time, and therefore the user can easily remember the contents of the program viewed until reproduction was suspended from the motion video of the recorded contents whose reproduction is started and the automatically displayed title and recording date and time, etc.

The method of displaying information on a digital recording and reproducing device comprising the information display means according to a fifth aspect of the invention is characterized in that when reproduction of second recorded contents is carried out, information on second recorded contents whose reproduction is started following first contents is automatically displayed together with a motion video whose reproduction is started for a predetermined time.

According to the fifth aspect of the invention, when reproduction of second recorded contents is carried out, information on second recorded contents whose reproduction is started following first recorded contents is automatically displayed together with a motion video whose reproduction is started for a predetermined time, and therefore there is no need for checking the reproduced video by operating a remote controller when the recorded contents are switched over and it is possible to easily check a summary of recorded contents of a program whose reproduction is started next.

According to the digital recording and reproducing device and the method of displaying information on a digital recording and reproducing device comprising the information display means according to the first aspect of the invention, the recorded contents information such as titles and recording dates and times of the plurality of recorded contents recorded in the recording medium are displayed together with the reproduced motion video every time reproduction of the recorded contents is instructed, and therefore it is possible to easily and exactly confirm a summary of a program whose reproduction is started from both the reproduced motion video, and displayed recording date and time and a title representing the program contents, etc., and therefore even if the user forgets the recorded contents, the user can easily remember the recorded contents, and even when the moment of recording start slightly differs from the start position of recorded contents and the video whose reproduction is resumed is, for example, a commercial video, it is possible to easily decide that the next reproduced video displayed corresponds to the recorded contents in which the desired program is recorded, and therefore the user can continue to view the video without any worries and when a commercial still image is displayed as the recorded contents information, it is possible to avoid the possibility that it may be impossible to decide from the recorded contents information whether the program is the desired program or not, allowing the user to exactly know a summary of the desired program. Moreover, the video displayed together with the recorded contents information when reproduction is started is not a still image and a motion video is reproduced, and therefore there is not need for the memory area for storing still images, it is possible to avoid a cost increase for the memory, etc., and prevent signal processing for storing the still images from becoming more complicated.

According to the digital recording and reproducing device and the method of displaying information on a digital recording and reproducing device comprising the information display means according to the second aspect of the invention, when simple reproduction is carried out and reproduction is instructed by the user, reproduction of the plurality of recorded contents recorded in the recording medium is automatically started one by one starting with the initially recorded contents and the recorded contents information is automatically displayed together with the motion video whose reproduction is started for a predetermined time, and therefore it is possible to check a summary of the program from the motion video whose reproduction is started, recording date and time and title representing the summary of the recorded program, etc.

According to the digital recording and reproducing device and the method of displaying information on a digital recording and reproducing device comprising the information display means according to the third aspect of the invention, when selective reproduction is carried out, a list of information on the plurality of recorded contents is displayed, recorded contents to be reproduced can be selected from the list of information on the displayed recording contents, and therefore it is possible to easily know what program was recorded at what time in the recording medium and easily select the recording contents in which the desired program is recorded after checking the summary of the program. Furthermore, the recorded contents information is automatically displayed together with the next selected motion video whose reproduction is started for a predetermined time, and therefore it is also possible to easily reconfirm whether the selected recorded contents correspond to the desired program or not.

According to the digital recording and reproducing device and the method of displaying information on a digital recording and reproducing device comprising the information display means according to the fourth aspect of the invention, when reproduction is carried out from a stop position, reproduction is resumed starting at the stop position at which the reproduction is stopped and the recorded contents information is automatically displayed together with a motion video whose reproduction is started for a predetermined time, and therefore the user can easily remember the contents of the program viewed until reproductionwas suspended from both the reproducedvideo of the program whose reproduction was suspended by stoppage and the recorded contents information indicating a summary of the program whose reproduction is started. However, the contents at the moment of suspension may be changed depending on the reason for the suspension as follows. For example, when the user cannot help but suspend the reproduction due to a sudden visitor or telephone call, the user is likely to make an emergency stop of the program being reproduced at some midpoint. In such a case, the video whose reproduction is resumed is reproduced as a moving image which is a continuation of the program contents, and therefore the user can easily decide the kind of the program whose reproduction was suspended which corresponds to the recording contents. On the other hand, when the user suspends the reproduction because the user remembers something to do, the user often chooses a commercial timing as the timing to suspend the reproduction. In such a case, when the reproduction is resumed, the reproduction of the commercial is started, and so the user sometimes has difficulty in figuring out what program was being recorded judging from the reproduced video of the commercial. However, the present invention reproduces a moving image as the video displayed together with the recording contents information when reproduction is started, and therefore the user can easily remember the contents of the recorded contents whose reproduction is started from both a variation of the reproduced video displayed, title of the recorded contents information and recording date and time information.

According to the digital recording and reproducing device and the method of displaying information on a digital recording and reproducing device comprising the information display means according to the fifth aspect of the invention, when reproduction of second recorded contents is carried out, information on second recorded contents whose reproduction is started following first contents viewed so far is automatically displayed together with a motion video whose reproduction is started for a predetermined time, and therefore everybody can easily check a summary of recorded contents whose reproduction is started next when the recorded contents are switched over.

### BRIEF DESCRIPTION OF THE DRAWINGS

FIG. 1 is a block diagram illustrating a schematic structure of a digital recording and reproducing device and information display during reproduction showing an embodiment of the present invention.
FIG. 2 is a flow chart illustrating information displays of the digital recording and reproducing device showing the embodiment of the present invention.
FIG. 3 is illustration of display screens showing changes of information displays of the digital recording and reproducing device showing the embodiment of the present invention.
FIG. 4 is illustration of a list display example of information displays of the digital recording and reproducing device showing the embodiment of the present invention.
FIG. 5 is illustration of processes of an information display example during reproduction of the digital recording and reproducing device showing the embodiment of the present invention.
FIG. 6 is a perspective view illustrating a layout of operation keys of a remote controller carrying out remote control operations of the digital recording and reproducing device showing the embodiment of the present invention.
FIG. 7 is illustration of selection screens displayed in a reproduction process of a conventional digital recording and reproducing device.

### DETAILED DESCRIPTION OF THE PREFERRED EMBODIMENTS

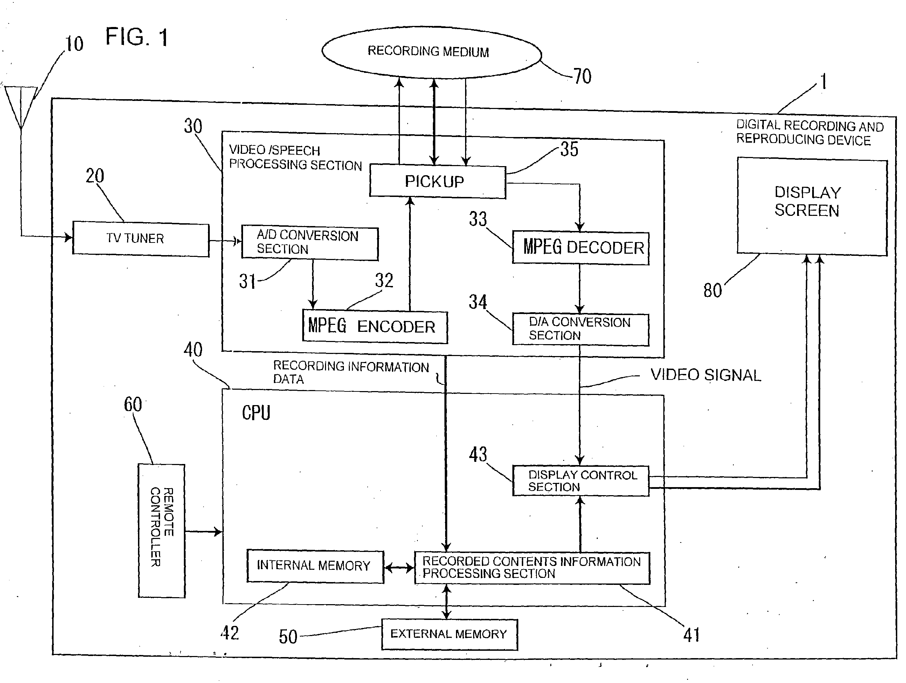

With reference now to FIGS. 1 to 6, preferred embodiments for implementing the present invention will be explained below. It goes without saying that the present invention is also easily applicable to cases other than those explained in the embodiment without departing from the essence of the invention.

FIG. 1 is a block diagram showing a schematic structure illustrating an embodiment of a digital recording and reproducing device and information display during reproduction according to the present invention.

A digital recording and reproducing device 1 is a television set with a built-in large-volume, randomly accessible DVD (Digital Versatile Disc) device and this recording and reproducing device 1 is provided with an Video/audio processing section 30 including an A/D conversion section 31 which converts a TV video signal supplied from a TV tuner 20 to a digital video signal, an MPEG (Moving Picture Experts Group) encoder 32 which encodes the digital video signal and converts it to an encoded video signal, a pickup 35 which records/reproduces the encoded video signal onto/from a DVD which is a randomly accessible recording medium 70, an MPEG decoder 33 which decodes the encoded video signal obtained through reproduction and a D/A conversion section 34 which converts the decoded video signal obtained through the decoding to an analog video signal, a CPU (Central Processing Unit) 40 including a display control section 43 which converts the analog video signal to a display video signal, a display screen 80 which displays the display video signal and a remote controller 60 which remote-controls these sections.

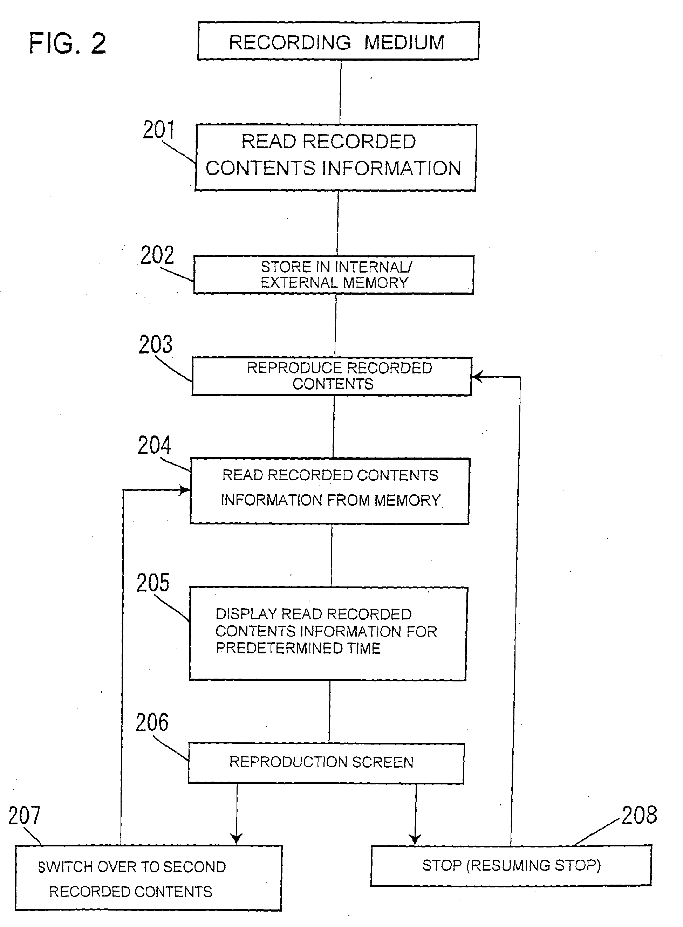

FIG. 2 is a flow chart showing an embodiment of information display during reproduction of the digital recording and reproducing device according to the present invention.

First, the operation when the recording medium 70 is loaded into the Video/audio processing section 30 of the digital recording and reproducing device 1 and a plurality of recorded contents recorded in the recording medium 70 are read from an information storage area will be explained with reference to FIG. 1 and FIG. 2 below.

When the recording medium 70 shown in FIG. 1 is loaded into the Video/audio processing section 30 of the digital recording and reproducing device 1, the Video/audio processing section 30 automatically reads recorded contents information such as titles, recording start dates and times, recording ending dates and times and recording modes corresponding to a plurality of recorded contents recorded in the information storage area of the recording medium 70 in 201 of FIG. 2 and hands over the contents information to the recorded contents information processing section 41 incorporated in the CPU 40.

The recorded contents information processing section 41 which has received this contents information stores the recorded contents information recorded in the loaded recording medium 70 into an internal memory 42 or an external memory 50 in 202 of FIG. 2. If no recorded contents are recorded at this time, it is not possible to read the information storage area, and so a "disk error" appears on the display screen.

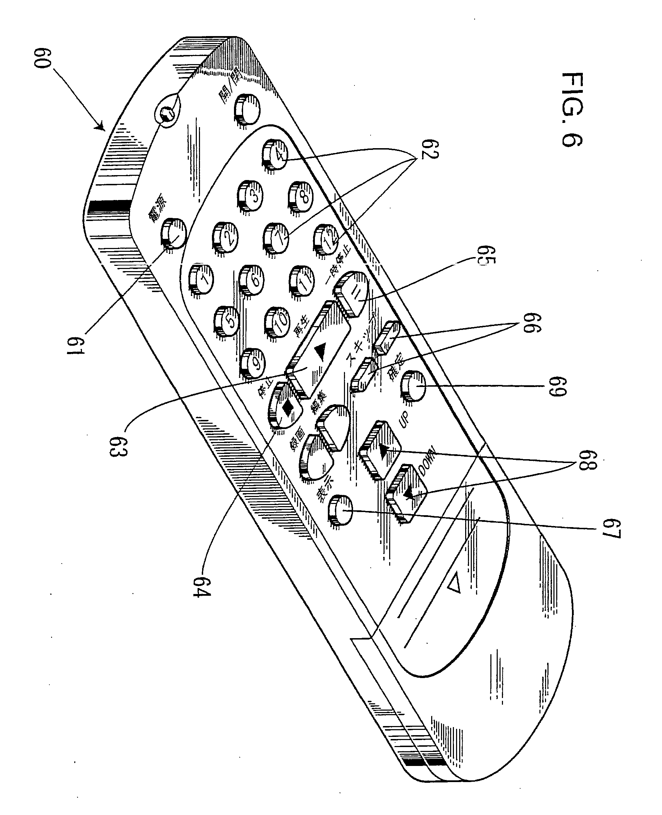

FIG. 6 is a perspective view showing an embodiment of a layout of operation keys of the remote controller of the digital recording and reproducing device according to the present invention.

Next, the operation when "simple reproduction" for viewing reproduced videos one by one starting with the initially recorded contents will be explained with reference to FIG. 1, FIG. 2 and FIG. 6 below. Here, this "simple reproduction" is not always limited to the order starting with the initially recorded contents, but can also be carried out in order starting with the newest recorded contents or reproduction order by genre, etc.

When the user tries to view reproduced videos one by one starting with the initially recorded contents from among a plurality of recorded contents recorded in the recording medium 70 shown in FIG. 1, the user presses a "Play key" 63 of the remote controller 60 shown in FIG. 1 and FIG. 6 once to instruct reproduction.

In this way, the recorded contents information processing section 41 incorporated in the CPU 40 moves to a reproduction operation in 203 of FIG. 2. The recorded contents information processing section 41 shown in FIG. 1 instructs the Video/audio processing section 30 to reproduce the recorded contents recorded in the recording medium 70 starting with ones with the oldest recorded date and the Video/audio processing section 30 reads the encoded video signal of the specified recorded contents from a plurality of recorded contents recorded in the recording medium 70 as the encoded video signal using the pickup 35 incorporated in the Video/audio processing section 30 incorporated in the Video/audio processing section 30 from the recording medium 70 and the MPEG decoder 33 also incorporated in the Video/audio processing section 30 decodes the encoded video signal. Next, the D/A conversion section 34 incorporated in the Video/audio processing section 30 converts the decoded video signal obtained through the decoding to an analog video signal and hands it over to the display control section 43 incorporated in the CPU 40. The display control section 43 converts the analog video signal to a display video signal which can be displayed on the display screen 80.

Next, in 204 of FIG. 2, the process moves to an operation of extracting information on the recorded contents frommemory. The recorded contents information recorded in the internal memory 42 or external memory 50 shown in FIG. 1 is extracted by the recorded contents information processing section 41 and handed over together with the video signal of the recorded contents to the display control section 43.

In step 205 of FIG. 2, the process thenmoves to an operation of displaying the extracted recorded contents information together with the reproduced video for a predetermined time. The display control section 43 shown in FIG. 1 converts the recorded contents information to a display character signal that can be displayed on the display screen 80 through abuilt-in OSD (On Screen Display) processing section (not shown) and the display control section 43 also processes the recorded contents information so that the recorded contents information can be overlapped with the display video signal of the recorded contents reproduced and the display screen 80 automatically displays the information as recorded contents information overlapped with the reproduced video for a predetermined time, approximately 4 seconds.

Next in step 206 of FIG. 2, the recorded contents information displayed for a predetermined time disappears from the display screen 80 and the reproduced video of the reproduced recorded contents is displayed continuously. This function assumes a request of a general user who wants to view scenes in order of recording and simply pressing the "Play key" 63 of the remote controller 60 starts reproduction in units of recorded contents recorded in the recording medium 70 and at the same time a summary of the recorded contents whose reproduction is started is automatically displayed, and therefore the user can simply confirm that reproduction of the recorded contents is started in accordance with the recorded image. However, in some situations, an instant at the start of recording may slightly differ from the start time of the recorded contents. For example, there may be cases where the recording start time is so early that it coincides with the last portion of the program ahead of the program to be recorded or the recording start time coincides with a commercial timing, etc. However, even in such cases, the video displayed is a moving image and after reproduction is started from the portion corresponding to the last portion of the preceding program, followed by a commercial until reproduction of the desired program to the user is started, it is possible to decide whether the recorded contents whose reproduction is started from now are the recorded contents of the desired program to the user or not easily and exactly by checking with recording contents information such as titles and recording dates and times displayed overlapped with the reproduced video . Thus, the user can wait for the program to start without any worries while viewing the commercial video, etc. , continuously displayed, or the user can immediately access the portion of the desired program to the user by skipping the reproduced video through fast forwarding by pressing "Skip keys" 66 of the remote controller 60 shown in FIG. 6. At this time, the recorded contents information on the recorded contents is also automatically displayed together with the reproduced video whose reproduction is skipped and then resumed.

In this connection, if there are recorded contents whose reproduction is suspended out of a plurality of recorded contents recorded in the recording medium, even if the "Play key" 63 of the remote controller 60 is pressed, the operation related to the resuming of the recorded contents whose reproduction has been suspended is given priority.

Next, when the reproduction of the first recorded contents which have been viewed so far out of the plurality of recorded contents recorded in the recording medium 70 is completed and switched to the next second recorded contents, the operation on the display of the recorded contents information when "reproduction of the second recorded contents" is started will be explained with reference to FIG. 1 and FIG. 2 below.

The reproduced video displayed on the display screen is in a stage in which the first recorded contents reproduced in 206 of FIG. 2 are completed and switched to the next recorded contents. Breaks between the individual recorded contents are defined by a recording start time and recording end time and form part of the recorded contents information and this recorded contents information recorded together with titles and recording modes in the information storage area has already been read at the time of reading of the recorded contents information in step 201 of FIG. 2 and stored in the internal memory 42 or external memory 50 in step 202 of FIG. 2.

At the time of switchover of the second recorded contents in step 207 of FIG. 2, in order to extract the second recorded contents information to be reproduced next from the internal memory 42 or external memory 50 in step 204 of FIG. 2, the recorded contents information processing section 41 shown in FIG. 1 detects a break of the recorded contents, decides the first recorded contents whose reproduction has just been completed and the second recorded contents whose reproduction is then resumed from the information of the plurality of recorded contents stored in the internal memory 42 or external memory 50, in step 205 of FIG. 2, the recorded contents information processing section 41 reads the information on the second recorded contents whose reproduction has been newly resumed from the internal memory 42 or external memory 50 and hands it over to the display control section 43. The display control section 43 converts the recorded contents information to a display character signal, processes it so that it can be overlapped with the reproduced video and hands it over to the display screen 80 and the display screen 80 automatically displays the recorded contents information overlapped with the video whose reproduction has been newly started together with the reproduced video for a predetermined time as information.

In this way, at the time of switchover of recorded contents, a summary of the recording contents whose reproduction is started next is automatically displayed together with the video whose reproduction is started without the user doing anything, and therefore the user can easily decide whether to continue to view the reproduced video of the recorded contents displayed or stop viewing.

Next, the display of recorded contents information when the recorded contents being reproduced are suspended and the rest of the recorded contents are reproduced later, that is, "reproduction from stop position" will be explained with reference to FIG. 1, FIG. 2 and FIG. 6 below.

When the recorded contents being reproduced in 206 of FIG. 2 are suspended in 208 of FIG. 2, the reproduction is suspended by pressing a "Stop key" 64 of the remote controller 60 shown in FIG. 1 and FIG. 6 once. In this way, the recorded contents information processing section 41 detects the position of the recorded contents at which reproduction thereof is suspended as the start position when the next reproduction is started and stores the position in the internal memory 42 or external memory 50.

Next in 203 of FIG. 2, when the rest of the suspended recorded contents are reproduced, the "Play key" 63 of the remote controller 60 shown in FIG. 1 and FIG. 6 is pressed once to give an instruction for reproduction. In this way, the recorded contents information processing section 41 decides that the stop position recorded in the internal memory 42 or external memory 50 corresponds to the recording contents suspended by the above described suspension, instructs the Video/audio processing section 30 to reproduce the recorded contents assuming that the stop position is the resuming portion of reproduction and the Video/audio processing section 30 resumes reading of the encoded video signal of the recorded contents from the recording medium 70.

Next, in 204 of FIG. 2, the process moves to an operation of extracting information on the recorded contents whose reproduction is resumed from memory. In 208 of FIG. 2, the recorded contents information processing section 41 extracts the suspended recorded contents information whose reproduction stop position is stored in the internal memory 42 or external memory 50 and hands it over to the display control section 43 together with the video signal of the recorded contents. The built-in OSD processing section (not shown) in the display control section 43 converts the recorded contents information to a display character signal and the display control section 43 also processes the display character signal so that it can be overlapped and the display screen 80 automatically displays the recorded contents information overlapped with the reproduced video together with the reproduced video for a predetermined time as information.

This allows the user to easily remember the story of the program before the reproduction is suspended. However, the contents at the moment of suspension may be changed depending on the reason for the suspension as follows. For example, when the user cannot help but suspend the reproduction due to a sudden visitor or telephone call, the user is likely to make an emergency stop of the program being reproduced at some midpoint. However, in this case, the video whose reproduction is resumed is reproduced as a moving image which is a continuation of the program contents, and therefore the user can easily remember the program contents before the reproduction thereof is suspended by viewing it together with the recording contents information displayed at the same time. On the other hand, when the user suspends the reproduction because the user remembers something to do, the user often chooses a commercial timing as the timing to suspend the reproduction. In such a case, when the reproduction is resumed, the reproduction of the commercial is started, and so the user sometimes has difficulty in figuring out what program was being recorded judging from the reproduced video of the commercial. However, the present invention automatically displays the recording contents information together with the motion video whose reproduction is started as information, and therefore the user can easily comprehend a summary of the program whose recording is resumed and easily remember the story of the program before the reproduction thereof is suspended.

Next, the display of the recorded contents information when one of the plurality of recorded contents recorded in the recording medium 70 is selected and reproduced, that is, "selective reproduction" will be explained with reference to FIG. 1, FIG. 2 and FIG. 6 below.

In order to select and reproduce one of the plurality of recorded contents recorded in the recording medium 70, a "Display key" 67 of the remote controller 60 shown in FIG. 1 and FIG. 6 twice consecutively. The information of the plurality of recorded contents recorded in the recording medium 70 has already been read through the reading of the recorded contents information in 201 of FIG. 2 and stored in the internal memory 42 or external memory 50 shown in FIG. 1 as the recorded contents information in 202 of FIG. 2 and extracted from the memory by the recorded contents information processing section 41 which has received the instruction of the "Display key" 67 of the remote controller 60 and handed over to the display control section 43.

The built-in OSD processing section (not shown) in the display control section 43 converts the list information on the recorded contents to a display character signal. In parallel to this , the recorded contents information processing section 41 instructs a resumption of reproduction of the initially displayed recorded contents out of the plurality of recorded contents displayed in the list, the Video/audio processing section 30 reads an encoded video signal from the recording medium 70, the read encoded video signal is decoded by the MPEG decoder 33 of the Video/audio processing section 30, then converted to an analog video signal by the D/A conversion section 34 and handed over to the display control section 43. The display control section 43 converts the analog video signal to a display video signal, processes the display video signal so that it is displayed on the screen and the display screen 80 continues to display the signal until the user selects one from a menu displayed as Popup Menu showing the list of information on the plurality of recorded contents.

Next, when the user selects one of the recorded contents displayed in the popup menu by operating "UP/DOWN keys" 68 of the remote controller 60 shown in FIG. 1 and FIG. 6 and presses an "Enter key" 69 of the remote controller 60 shown in FIG. 1 and FIG. 6 once, the recorded contents information processing section 41 starts reproduction of the selected recorded contents in 203 of FIG. 2 and extracts the recorded contents information from the internal memory 42 or external memory 50 in 204 of FIG. 2 and the recorded contents information on the selected recorded contents are overlapped with the recorded contents video whose reproduction is started and displayed together with the reproduced video for a predetermined time as information in 205 of FIG. 2.

The user who carries out this series of operations presses the "Display key" 67 of the remote controller 60 twice consecutively first, then the display screen 80 displays a list of information on a plurality of recorded contents. Next, the user only needs to select recorded contents which are the desired program to the user from the list display on the display screen 80 using the "UP/DOWN keys" 68 of the remote controller 60 and press the "Enter key" 69 of the remote controller 60. Then, the reproduced video of the recorded contents selected by the user and the recorded contents information are automatically displayed as information, and therefore the user can continue to view the reproduced video while reconfirming the selected recorded contents information without carrying out any additional operations.

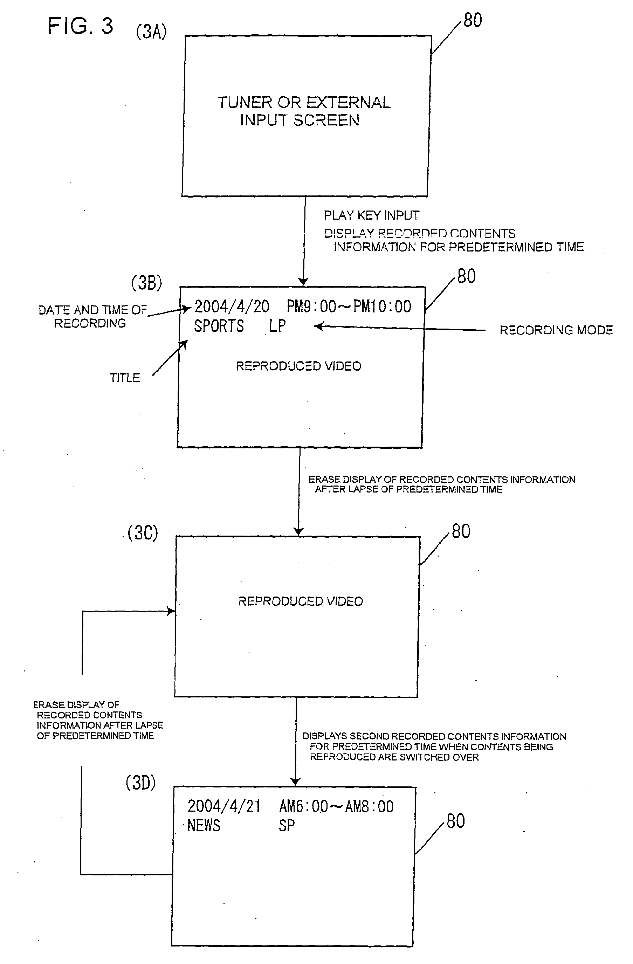

FIG. 3 is a transition diagram of a recording contents information display illustrating an embodiment of information displays during reproduction by the digital recording and reproducing device according to the present invention.

(3A) of FIG. 3 shows the display screen 80 of the digital recording and reproducing device 1 displayed until the user instructs reproduction of the recorded contents recorded in the recording medium 70 shown in FIG. 1.

When the user presses the "Play key" 63 of the remote controller 60 shown in FIG. 1 and FIG. 6 once and tries to view the reproduced videos one by one starting with the initially recorded contents in the recording medium 70, the previous video in (3A) of FIG. 3 is suspended, and the date and time at which the recording contents were recorded, title and recording mode are automatically displayed overlapped with the reproduced video of the initially recorded contents shown in (3B) of FIG. 3 as information. For example, (3B) of FIG. 3 shows that the recording started at 9:00 PM on April 20, 2004 and ended at 10:00 PM on the same day, the title is SPORTS and the recording mode is LP. This information display disappears after a lapse of approximately 4 seconds which is a predetermined time and only the reproduced video remains as shown in (3C) of FIG. 3.

Next, when the first recorded contents which have been reproduced so far are finished and switched to the next second recorded contents, the second recording contents information whose reproduction is newly started is automatically displayed overlapped with the reproduced video of the second recorded contents whose reproduction is newly started as information as shown in (3D) of FIG. 3. Here, the figure also shows that the recording started at 6:00 AM on April 21, 2004 and ended at 8: 00 AM on the same day, the title is NEWS and the recording mode is SP for the recorded contents whose reproduction is started. This information display also disappears after a lapse of approximately 4 seconds which is a predetermined time and only the reproduced video remains as shown in (3C) of FIG. 3.

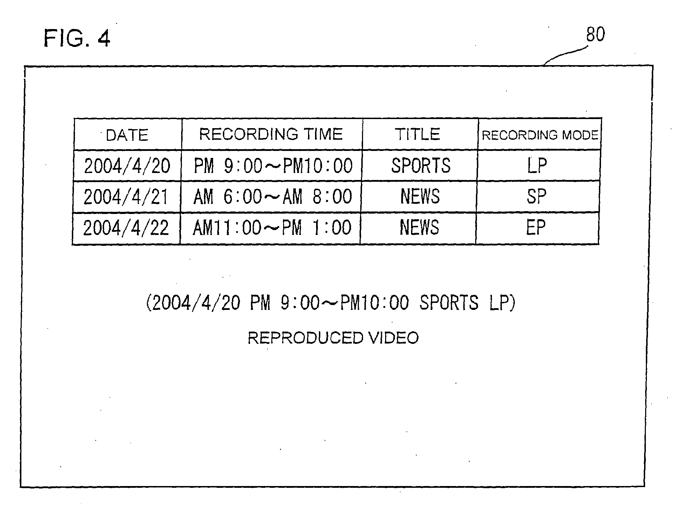

FIG. 4 is an example of list display of recorded contents information showing an embodiment of information display during reproduction by the digital recording and reproducing device according to the present invention.

When the display screen 80 is displayed when the user selects a desired program to the user from the list of the recorded contents information displayed in FIG. 4, the display screen 80 displays the reproduced video out of the recorded contents displayed at the top of the list display out of the plurality of recorded contents in the list. That is, according to the list display example in FIG. 4, the video of the recorded contents, recording of which started at 9:00 PM on April 20, 2004 and ended at 10:00 PM on the same day, with the title SPORTS and the recording mode LP is reproduced and displayed and a list of a plurality of recorded contents are displayed overlapped therewith. The list display includes fields of the date of recording, recording time, title of recording and recording mode, illustrating summaries of the plurality of recorded contents recorded in the recording medium 70 shown in FIG. 1. It is also possible to add a channel through which a program is aired to the items of this list display and the display order of the list display generally follows the order of dates of recording, but the user can change it to a display by genre or channel order, etc. This display screen 80 is displayed as a popup menu and when the user selects the news program recorded at 11:00 AM to 1:00 PM on April 22, 2004, which is the desired program to the user out of the individually displayed recorded contents information by operating the "UP/DOWN keys" 68 of the remote controller 60 shown in FIG. 1 and FIG. 6, the selected recorded contents are reproduced and the recorded contents information is automatically displayed for a predetermined time as information.

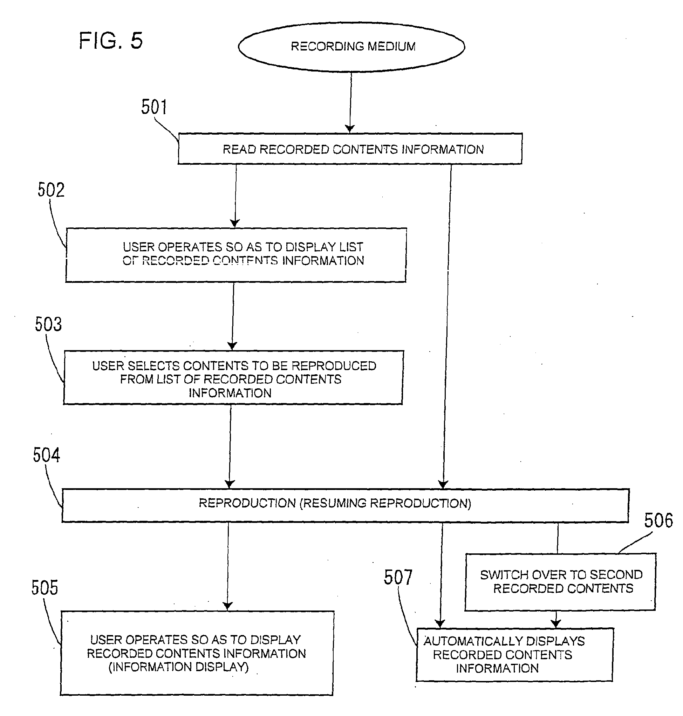

FIG. 5 illustrates information display processes showing an embodiment of information display during reproduction by the digital recording and reproducing device according to the present invention.

The information on the plurality of recorded contents recorded in the recording medium 70 shown in FIG. 1 has already been read from the recording medium 70 in 201 of FIG. 2, saved in the internal memory 42 or external memory 50 incorporated in the digital recording and reproducing device 1 and in a stage in which they are ready to be extracted from the memory at any time in 501 of FIG. 5.

In 502 of FIG. 5, when the user presses the "Display key" 67 of the remote controller 60 shown in FIG. 1 and FIG. 6 twice consecutively, the recorded contents information processing section 41 decides that the instruction of the remote controller 60 is an instruction for a list display of information on the plurality of recorded contents recorded in the recording medium and this causes the information on the plurality of recorded contents read from the memory to be displayed as a list of the recorded contents information on the display screen 80.

Next, in 503 of FIG. 5, the user selects recorded contents to be reproduced from the display screen 80 displayed in a popup menu by operating the "UP/DOWN keys" 68 of the remote controller 60 shown in FIG. 1 and FIG. 6 and pressing the "Enter key" 69 of the remote controller 60, in 504 of FIG. 5, the video of selected recorded contents is reproduced and the recorded contents information is displayed as information.

Next in 505 of FIG. 5, when the user checks a summary of the recorded contents being reproduced, the user presses the "Display key" 67 of the remote controller 60 once and the recording contents information processing section 41 decides that the instruction of the remote controller 60 is an instruction for a display of information on the recorded contents being currently reproduced and displays the information on the recorded contents being reproduced as information.

Next, when the first recorded contents being reproduced in 504 of FIG. 5 are finished and switched to the next second recorded contents, the second recorded contents information together with the video of the second recorded contents to be newly reproduced next are automatically displayed as information in 506 of FIG. 5.

Furthermore, when the recorded contents being reproduced in 504 of FIG. 5 are suspended at some midpoint of reproduction and reproduction of the recorded contents is resumed later, only pressing the "Play key" 63 of the remote controller 60 shown in FIG. 1 and FIG. 6 once causes the suspended reproduction of the recorded contents to start and the recorded contents information whose reproduction is resumed to be automatically displayed as information as shown in 507 of FIG. 5, which eliminates the necessity for a selection from the list of still images by operating the remote controller every time the user reproduces and views the recorded contents as in the conventional example.

Next, the relationship between various types of operation keys of the remote controller 60, reproduced video and an example of information display will be explained.

Pressing the "Play key" 63 of the remote controller 60 shown in FIG. 1 and FIG. 6 once causes reproduction of the recorded contents to start one by one starting with the initially recorded contents in the recording medium 70 and automatically displays the reproduced recorded contents information. However, when the recording medium includes recorded contents whose reproduction is suspended, even if the "Play key" 63 is pressed once, the operation of resuming reproduction of the rest of the recorded contents whose reproduction is suspended is given priority over the operation of reproduction in order of recording and the recorded contents information on the recorded contents whose reproduction is resumed is automatically displayed.

Next, pressing the "Display key" 67 of the remote controller 60 shown in FIG. 1 and FIG. 6 once automatically displays the recorded contents information on the recorded contents being currently reproduced.

Likewise, pressing the "Display key" 67 twice consecutively displays a list of recorded contents information on the plurality of recorded contents recorded in the recording medium 70 and displays the reproduced video of the recorded contents at the top of the list display.

Next, selecting specific recorded contents from the list display using the "UP/DOWN keys" 68 of the remote controller 60 shown in FIG. 1 and FIG. 6 and pressing the "Enter key" 69 of the remote controller 60 causes the reproduced video of the selected recorded contents and recorded contents information to be automatically displayed.

Furthermore, pressing the "Skip keys" 66 of the remote controller 60 shown in FIG. 1 and FIG. 6 during recording or reproduction causes the reproduced video after a skip and the recorded contents information to be automatically displayed.

Furthermore, when the first recorded contents are finished during recording or reproduction and switched to the second recorded contents, the reproduced video of the second recorded contents to be reproduced next and the second recorded contents information are automatically displayed, and therefore the operation of the remote controller 60 is not necessary.

As shown above, according to this embodiment, the digital recording and reproducing device 1 of the present invention can display what programs were recorded at what time in the recordingmedium 70 in the form of a list by pressing the "Display key" 67 of the remote controller 60 shown in FIG. 1 and FIG. 6, and therefore any user can simply and easily know what programs were recorded at what time. Furthermore, the user can check a summary of the program from the recording date and time and title beforehand, select the recorded contents in which the desired program to the user is recorded from a popup menu displayed on the display screen 80 using the "UP/DOWN keys" 68 of the remote controller 60 shown in FIG. 1 and FIG. 6 and by simply pressing the "Enter key" 69 of the remote controller 60 to select the desired program, and therefore it is simple and easy to search and reproduce specific recorded contents from a list.

Following this, the display control section 43 automatically displays the recorded contents information on the reproduced video overlapped with the selected video whose reproduction is started on the display screen 80 for a predetermined time, approximately 4 seconds, and therefore the user need not operate the remote controller 60 again and can simply reconfirm whether the selected recorded contents correspond to the desired program to the user or not.

Furthermore, when reproduction is started, the reproduced video displayed together with the recording contents information on the display screen 80 is not a still image but a moving image, and therefore the user can check with both a variation in the displayed reproduced video and the title of the recorded contents information and recording date and time information.

Following this, when a plurality of recorded contents recorded in the recording medium 70 are reproduced one by one starting with the initially recorded contents, only pressing the "Play key" 63 of the remote controller 60 shown in FIG. 1 and FIG. 6 causes reproduction to start one by one starting with the initially recorded contents and the display control section 43 automatically displays the recorded contents information on the reproduced video overlapped with the video whose reproduction is started together with the reproduced video on the display screen 80 for a predetermined time, approximately 4 seconds as information, and therefore the user need not select from still images representing the plurality of recorded content by operating the remote controller 60 every time the recorded contents are reproduced and can check a summary of the reproduced program from the video whose reproduction is started, date and time of recording and title representing the recorded program contents, etc.

On the other hand, when the user suspends reproduction of the recorded contents, finishes his/her business first and then resumes reproduction, the reproduction is resumed from the stop position at which the reproduction was stopped by pressing the "Play key" 63 of the remote controller 60 and the recorded contents information on the reproduced video is automatically displayed overlapped with the video whose reproduction is started for a predetermined time as information, which eliminates the necessity for searching for recorded contents whose reproduction is suspended from a list of still images including recording contents suspended amidst of reproduction in a plurality of recorded contents by operating the remote controller 60, improves ease of operation for the user, allows the user to check from both the reproduced video of the program whose reproduction is suspended and recorded contents information showing a summary of the program whose reproduction is resumed, and therefore even if the user forgets the reproduction contents due to stoppage, the user can immediately know what recording contents were being reproduced before the stoppage and easily remember the summary of the program the user was viewing until reproduction was suspended.

Furthermore, when the "Play key" 63 of the remote controller 60 is pressed, there can be two ways of reproduction; reproduction in order of recording and resuming reproduction of recorded contents whose reproduction is suspended, but taking into consideration a general idea that the user prefers to view recorded contents whose reproduction is suspended first, when the recording medium 70 includes recorded contents whose reproduction is suspended, this embodiment reproduces the recorded contents with high priority.

Furthermore, at the time of switchover between a plurality of recorded contents recorded in the recording medium 70, the display control section 43 automatically displays the recorded contents information on the reproduced video whose reproduction is then resumed overlapped with the reproduced video on the display screen 80 for a predetermined time as information, and therefore the user need not check the reproduced video by operating the remote controller 60 at the time of switchover between recorded contents and everybody can simply and easily check a summary of the recorded contents whose reproduction is started and it is thereby possible to improve convenience for the user.

Moreover, the information display means can be realized by only microcomputer software processing by the digital recording and reproducing device 1 and does not require any additional cost. Furthermore, unlike the conventional example which is a method of selecting from a list of still images corresponding to recorded contents, reproduction is started with a moving image and the user can check from both the title of the recorded contents information and recording date and time information overlapped with this video, and therefore even when the user forgets the recorded contents, the user can easily remember them from both a variation of the reproduced video displayed and the recorded contents information, and in such a situation in which the user needs to hastily start recording because the user remembers not having made any recording reservation beforehand or the user wants to record a program the user is viewing at some midpoint thereof, the moment the reproduction starts may often slightly differ from the start time of the recorded contents. For example, there may be cases where the recording start time is so early that it coincides with the last part of the program just before the program to be recorded or it coincides with commercial timings or the program is started. However, even in such cases, when the video displayed is a moving image, reproduction is started from the portion corresponding to the last part of the previous program, followed by a commercial until the desired program is reproduced, the user can easily and exactly decide whether the recorded contents whose reproduction is started correspond to the recorded contents in which the desired program is recorded or not from the recorded contents information such as the title and recording date and time displayed overlapped with the reproduced video, and therefore the user canwait until the start screen of the program without any worries while viewing the video displayed or immediately access a portion of the program by operating the "Skip keys" 66 of the remote controller 60. The recorded contents information is automatically displayed together with the reproduced video whose reproduction is skipped and then resumed for a predetermined time as information at this time, too, and therefore it is possible to avoid a situation in the conventional example in which the still image of the start screen representing the recorded contents does not match the still image truly representing the recorded contents due to a difference in the recording start timing, etc., and it is difficult to guess a summary of the program from the list of still images and avoid a situation in which it becomes impossible to decide whether the program is the one the user wants to view or not from this recorded contents information.

This embodiment has been explained in detail so far, but the present invention is not limited to the embodiment described above and can be modified in various ways without departing from the scope of the essence of the present invention. For example, the recording medium for the digital recording and reproducing device 1 is not limited to a DVD, but can also be changed to a HDD, etc., if it has a large volume and can at least read/write recorded contents from/into a randomly accessible recording medium. Moreover, the section which displays a video in a digital recording and reproducing device need not always be incorporated as one unit and it is possible to easily realize the function of the digital recording and reproducing device 1 of the present invention by combining a plurality of devices. Furthermore, in addition to a title of recorded contents information, recording date and time, recording mode, etc., it is also possible to add a channel or change items, contents, layout on the display screen 80, etc. , within a range in which the contents of recorded contents can be transmitted exactly taking into account the ease of operation. Moreover, when "selective reproduction" is carried out, in addition to the method of pressing the "Display key" 67 twice to instruct a list display first, it is possible to change the method taking into account the ease of operation such as a method of providing the remote controller 60 with a separate "List display key" (not shown) and pressing the key only once for an instruction, and in this way the present invention is not limited to the above described embodiment and the method can be selected as appropriate.

## Claims

1. A digital recording and reproducing device comprising:
recording and reproducing means for recording and reproducing a plurality of recorded contents into and from a randomly accessible recording medium; and
a remote controller which remote-controls said recording and reproducing means,
**characterized in that** recorded contents information such as titles and recording dates and times of the plurality of recorded contents recorded in said recording medium is recorded in an information storage area of said recording medium, said recorded contents information is read from said information storage area, stored in a memory by a recorded contents information processing section, said recorded contents information is read by said recorded contents information processing section from said memory every time reproduction of said recorded contents is instructed and information display means is provided for displaying said recorded contents information together with a motion video whose reproduction is started by said display control section for a predetermined time.

2. A method of displaying information on a digital recording and reproducing device comprising the information display means according to claim 1, **characterized in that** when simple reproduction is carried out and reproduction is instructed, said information display means automatically starts reproduction of the plurality of recorded contents recorded in said recording medium one by one starting with the initially recorded contents and automatically displays said recorded contents information together with said motion video whose reproduction is started for a predetermined time.

3. The method of displaying information on a digital recording and reproducing device comprising the information display means according to claim 1, **characterized in that** when selective reproduction is carried out, said information display means displays a list of information on said plurality of recorded contents, allows recorded contents to be reproduced to be selected from said list of information on the displayed recording contents and thereby automatically displays said recorded contents information together with said selected motion video whose reproduction is started for a predetermined time.

4. The method of displaying information on a digital recording and reproducing device comprising the information display means according to claim 1, **characterized in that** when reproduction is carried out from a stop position, said information display means resumes reproduction starting at the stop position at which said reproduction is stopped and automatically displays said recorded contents information together with a motion video whose reproduction is started for a predetermined time.

5. The method of displaying information on a digital recording and reproducing device comprising the information display means according to claim 1, **characterized in that** when reproduction of second recorded contents is carried out, said information display means automatically displays information on second recorded contents whose reproduction is started following first contents together with a motion video whose reproduction is started for a predetermined time.
